# EUROPEAN PATENT APPLICATION

(11) **EP 2 634 669 A2**
(43) Date of publication of application: **04.09.2013**
(21) Application number: 13157365.1
(22) Date of filing: 01.03.2013
(51) Int. Cl.: G06F 1/32

(54) **Electronic apparatus with power saving**

(30) Priority: 02.03.2012 JP 2012046413; 02.03.2012 JP 2012046514; 16.01.2013 JP 2013005593
(71) Applicant: Funai Electric Co., Ltd., Daito-shi, Osaka 574-0013 (JP)
(72) Inventor: Matsumura, Akifumi, Daito-shi, Osaka 574-0013 (JP); Yamashita, Yudai, Daito-shi, Osaka 574-0013 (JP)
(74) Representative: Grünecker, Kinkeldey, Stockmair & Schwanhäusser

(57) **Abstract**

This electronic apparatus (100) includes a plurality of functional blocks (14, 15, 16, 30, 40, 50, 52, 53, 54, 60, 70, 80, 82, 90, 91), a storage portion (18) storing and accumulating use states of the plurality of functional blocks, and a control portion (10). The control portion is configured to perform control of disconnecting power supplied to a functional block whose usage rate is not more than a prescribed usage rate, tending to be disused, of the plurality of functional blocks in a state where power is supplied to at least one functional block.

## Description

### BACKGROUND OF THE INVENTION

### Field of the Invention

The present invention relates to an electronic apparatus, and more particularly, it relates to an electronic apparatus including a plurality of functional blocks.

### Description of the Background Art

An electronic apparatus including a plurality of functional blocks is known in general, as disclosed in Japanese Patent Laying-Open No. 2011-065494, for example.

The aforementioned Japanese Patent Laying-Open No. 2011-065494 discloses a multi-function apparatus (electronic apparatus) including a copy function, a facsimile function, a printer function, a scanner function (plurality of functional blocks), and a CPU (control portion) controlling power supplied in response to an operating mode such as a normal mode or power-saving mode. In this multi-function apparatus, the CPU is configured to perform control of shifting to the power-saving mode which is a standby state by performing control of reducing power supply on the basis of the operating states of a plurality of client computers on a network and another multi-function apparatus.

In the multi-function apparatus (electronic apparatus) according to the aforementioned Japanese Patent Laying-Open No. 2011-065494, however, power supply is not reduced in the normal mode in which power is supplied to each function whereas power consumption can be reduced by reducing power supply in the power-saving mode which is a standby state. Thus, it is difficult to reduce power consumption.

### SUMMARY OF THE INVENTION

The present invention has been proposed in order to solve the aforementioned problem, and an object of the present invention is to provide an electronic apparatus capable of reducing power consumption in a state where power is supplied to functional blocks of the electronic apparatus.

An electronic apparatus according to the aspect of the present invention includes a plurality of functional blocks, a storage portion storing and accumulating the use states of the plurality of functional blocks, and a control portion, while the control portion is configured to acquire use tendency information of the plurality of functional blocks on the basis of the use states of the plurality of functional blocks accumulated in the storage portion and perform control of disconnecting power supplied to a functional block whose usage rate is not more than a prescribed usage rate, tending to be disused, of the plurality of functional blocks in a state where power is supplied to at least one functional block on the basis of the use tendency information of the plurality of functional blocks.

As hereinabove described, the electronic apparatus according an aspect of the present invention is provided with the control portion performing control of disconnecting the power supplied to the functional block whose usage rate is not more than the prescribed usage rate, tending to be disused, of the plurality of functional blocks in the state where power is supplied to at least one functional block, whereby power supply to the functional block tending to be disused can be disconnected while power supply to a functional block tending to be used is continued, and hence power consumption in the state where power is supplied to the functional blocks of the electronic apparatus can be reduced. Furthermore, the power supplied to the functional block having a function which a user uses only at not more than the prescribed usage rate can be disconnected in the state where power is supplied to at least one functional block, and hence power consumption of the electronic apparatus can be reduced without reducing user's convenience. In addition, in the structure of activating the functional blocks by developing programs, the functional block tending to be disused is not activated, and hence an area for developing a program starting the functional block tending to be disused can be opened up to another functional block tending to be used, so that processing load on the control portion can be reduced. Moreover, power is not supplied to the functional block tending to be disused, and hence heat generation resulting from power distribution can be reduced. Thus, the lifetime of the electronic apparatus can be increased. Besides, the control portion is configured to acquire the use tendency information of the plurality of functional blocks on the basis of the use states of the plurality of functional blocks accumulated in the storage portion, respectively, whereby the use tendency information of the plurality of functional blocks can be easily acquired on the basis of the use states of the plurality of functional blocks accumulated in the storage portion, respectively.

In the aforementioned electronic apparatus according to the aspect, the control portion is preferably configured to determine tendency to be disused by acquiring the use tendency information of the plurality of functional blocks on the basis of at least one of the lengths of time functions are used, the numbers of times the functions are used, validity/invalidity of the functions, and the amounts of processed information. According to this structure, tendency to be disused according to the actual use state of the user can be easily determined on the basis of the lengths of time the functions are used, the numbers of times the functions are used, the validity/invalidity of the functions, or the amounts of processed information.

In the aforementioned electronic apparatus according to the aspect, the control portion is preferably configured to determine tendency to be disused by acquiring the use tendency information of the plurality of functional blocks on the basis of at least one of the use states of the plurality of functional blocks accumulated in a prescribed period of time and the use states of the plurality of functional blocks accumulated for each time zone. According to this structure, tendency to be disused according to the actual use state of the user can be accurately determined on the basis of the use states of the plurality of functional blocks accumulated in the prescribed period of time or the use states of the plurality of functional blocks accumulated for each time zone.

In the aforementioned electronic apparatus according to the aspect, the control portion is preferably configured to perform control of disconnecting the power supplied to the functional block whose usage rate is not more than the prescribed usage rate with respect to at least one of the usage times of functions, the usage frequencies of the functions, the validity times or validity frequencies of the functions, and the amounts of processed information, tending to be disused, of the plurality of functional blocks. According to this structure, power supply to the functional block whose usage rate is not more than the prescribed usage rate with respect to the usage times of the functions, the usage frequencies of the functions, the validity times or validity frequencies of the functions, and the amounts of processed information, tending to be disused can be disconnected, and hence power consumption in the state where power is supplied to the functional blocks of the electronic apparatus can be easily reduced without reducing user's convenience.

In the aforementioned electronic apparatus according to the aspect, the control portion is preferably configured to perform control of lowering the priority of display of a user interface for operating the functional block tending to be disused of the plurality of functional blocks on the basis of the use tendency information of the plurality of functional blocks. According to this structure, user interfaces are so organized that the display of the user interface for operating the functional block tending to be disused is hidden or the like to be inconspicuous, and hence the user can easily access a user interface for operating the functional block tending to be used. Thus, the user can easily access necessary information.

The aforementioned electronic apparatus according to the aspect preferably further includes a plurality of power switches corresponding to the plurality of functional blocks, and the control portion is preferably configured to perform control of disconnecting the power supplied to the functional block tending to be disused by controlling the power switches. According to this structure, the power supplied to the functional block tending to be disused can be easily disconnected by controlling the power switches.

The aforementioned electronic apparatus according to the aspect preferably further includes a communication portion capable of transmitting the use tendency information to an external host computer through a network. According to this structure, the use tendency information of the electronic apparatus is collected in the external host computer, and hence the host computer can feed back a result of analysis of the use tendency of the electronic apparatus to development of a next-generation electronic apparatus.

In the aforementioned electronic apparatus according to the aspect, the control portion is preferably configured to notify the user to operate a functional block corresponding to a prescribed use status of the plurality of functional blocks on the basis of use status information regarding the use states of the plurality of functional blocks. According to this structure, the user can stop or suppress use of each of the functional blocks on the basis of the notification, and hence power saving can be achieved in the electronic apparatus. Furthermore, the user can operate the functional blocks on the basis of the notification, and hence change in settings against the user's intention can be suppressed while the user's awareness of power saving can be promoted.

In the aforementioned structure of notifying the user to operate the functional block, the control portion is preferably configured to notify the user to operate the functional block corresponding to the prescribed use status on the basis of the use status information regarding at least one of use tendencies based on results of accumulation of the use states of the plurality of functional blocks and the use states of the plurality of functional blocks. According to this structure, the electronic apparatus can easily notify the user to operate the functional block corresponding to the prescribed use status by determining the use tendencies or the use states by the control portion.

In the aforementioned structure of notifying the user to operate the functional block, the prescribed use status preferably includes at least one of statuses of a prescribed usage rate, a prescribed usage time, a prescribed usage frequency, an untouched state, and a prescribed use state of a record medium. According to this structure, the electronic apparatus can more properly notify the user to operate the functional block corresponding to the prescribed usage rate, the prescribed usage time, the prescribed usage frequency, the untouched state, or the prescribed use state of the record medium as the prescribed use status.

In this case, the control portion is preferably configured to notify the user to stop the functional block whose usage rate is not more than the prescribed usage rate as the prescribed use status, tending to be disused, of the plurality of functional blocks on the basis of the use status information. According to this structure, the user can easily stop the functional block tending to be disused, and hence power saving can be achieved in the electronic apparatus without reducing user's convenience.

In the aforementioned structure of notifying the user to operate the functional block, the control portion is preferably configured to perform control of outputting notification information for instructing the user to operate the functional block to an external display device. According to this structure, the user can be visually prompted to save power in the electronic apparatus with the external display device.

In the aforementioned structure of notifying the user to operate the functional block, notification for instructing the user to operate the functional block preferably includes display notification, and the control portion is preferably configured to perform control of displaying guidance for operating the functional block in the prescribed use status. According to this structure, it becomes easy for the user to operate the functional block in the prescribed use status, and hence the user can easily configure the settings for each of the functional blocks. Thus, power saving can be easily achieved in the electronic apparatus.

In the aforementioned structure of notifying the user to operate the functional block, the control portion is preferably configured to notify the user to operate the functional block on the basis of the use status information of the plurality of functional blocks and perform control of stopping the functional block corresponding to the prescribed use status. According to this structure, the user can be made aware of the functional block corresponding to the prescribed use status, and power saving can be achieved in the electronic apparatus by stopping the functional block. Furthermore, the functional block corresponding to the prescribed use status is stopped, and hence heat generation resulting from power distribution can be reduced. Thus, the lifetime of the electronic apparatus can be increased.

In the aforementioned structure of notifying the user to operate the functional block, the electronic apparatus is preferably so configured that the use status information of the plurality of functional blocks is stored and accumulated in the storage portion, and the control portion is preferably configured to store and accumulate the use status information in the storage portion and notify the user to operate the functional block on the basis of the use status information accumulated in the storage portion. According to this structure, the electronic apparatus can easily notify the user to operate the functional block on the basis of the use status information of the plurality of functional blocks accumulated in the storage portion.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an overall view schematically showing a power supply control system according to a first embodiment of the present invention;
Fig. 2 is a block diagram showing a BD recorder according to the first embodiment of the present invention;
Fig. 3 is a flowchart for illustrating power consumption reduction processing performed by a main MCU of the BD recorder according to the first embodiment of the present invention;
Fig. 4 illustrates display of a user interface of the BD recorder according to the first embodiment of the present invention;
Fig. 5 is an overall view schematically showing an electronic apparatus management system according to a second embodiment of the present invention;
Fig. 6 is a block diagram showing a BD recorder according to the second embodiment of the present invention;
Fig. 7 is a flowchart for illustrating use status information processing performed by a main MCU of the BD recorder according to the second embodiment of the present invention;
Fig. 8 illustrates a first display example of display on a TV of the BD recorder according to the second embodiment of the present invention;
Fig. 9 illustrates a second display example of display on the TV of the BD recorder according to the second embodiment of the present invention; and
Fig. 10 illustrates a third display example of display on the TV of the BD recorder according to the second embodiment of the present invention.

### DESCRIPTION OF THE PREFERRED EMBODIMENTS

Embodiments of the present invention are now described with reference to the drawings.

### (First Embodiment)

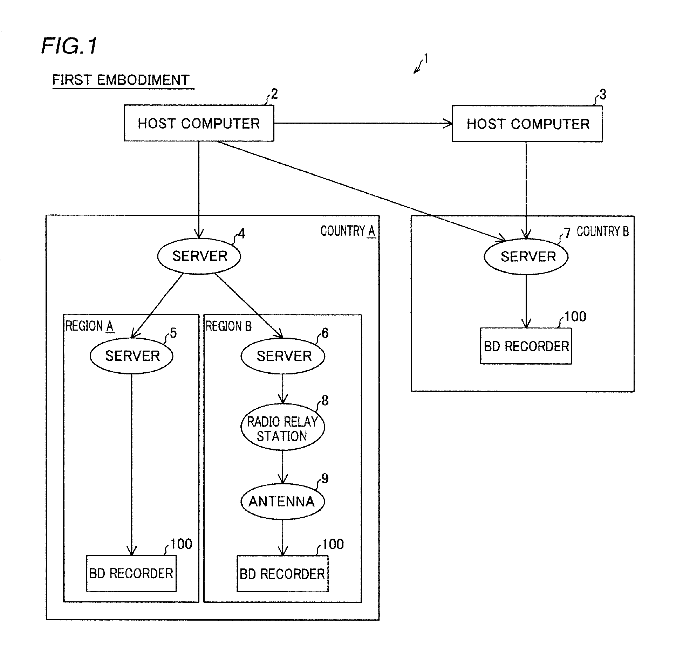

First, the structure of a power supply control system 1 according to a first embodiment of the present invention is described with reference to Fig. 1.

The power supply control system 1 includes host computers 2 and 3, servers 4, 5, 6, and 7, a radio relay station 8, an antenna 9, and a plurality of BD (Blu-ray Disc) recorders 100, as shown in Fig. 1. The BD recorders 100 are examples of the "electronic apparatus" in the present invention.

The host computer 2 is configured to be connectable to the host computer 3, the server 4 in a country A, and the server 7 in a country B through a network. The host computer 3 is configured to be connectable to the server 7 in the country B through the network. The host computers 2 and 3 are configured to be capable of receiving use tendency information described later from the BD recorders 100 through the network. Furthermore, the host computers 2 and 3 are configured to be capable of analyzing the use tendency information received from the BD recorders 100. In addition, the host computers 2 and 3 are configured to be capable of transmitting control signals to the BD recorders 100 through the network on the basis of a result of analysis of the use tendency information. Moreover, the host computers 2 and 3 are configured to be capable of transmitting control signals collectively to each country or each region. Thus, power supplied to each of functional blocks of the BD recorders 100 can be disconnected by transmitting the control signals collectively to the BD recorders 100 for each country or each region by the host computers 2 and 3. Consequently, power consumption in the countries or the regions can be reduced simultaneously when power saving is required on a country or region basis.

The servers 4 to 7 are provided in the network. The server 4 is provided in the country A. Furthermore, the server 4 is connected with the servers 5 and 6 through the network. The server 5 is provided in a region A in the country A. Furthermore, the server 5 is connected with the BD recorder 100 in the region A in the country A. The server 6 is provided in a region B in the country A. Furthermore, the server 6 is connected with the BD recorder 100 in the region B in the country A through the radio relay station 8 and the antenna 9 in the region B in the country A. The server 7 is provided in the country B. Furthermore, the server 7 is connected with the BD recorder 100 in the country B. Thus, the plurality of BD recorders 100 are connected to the host computers 2 and 3 through the network.

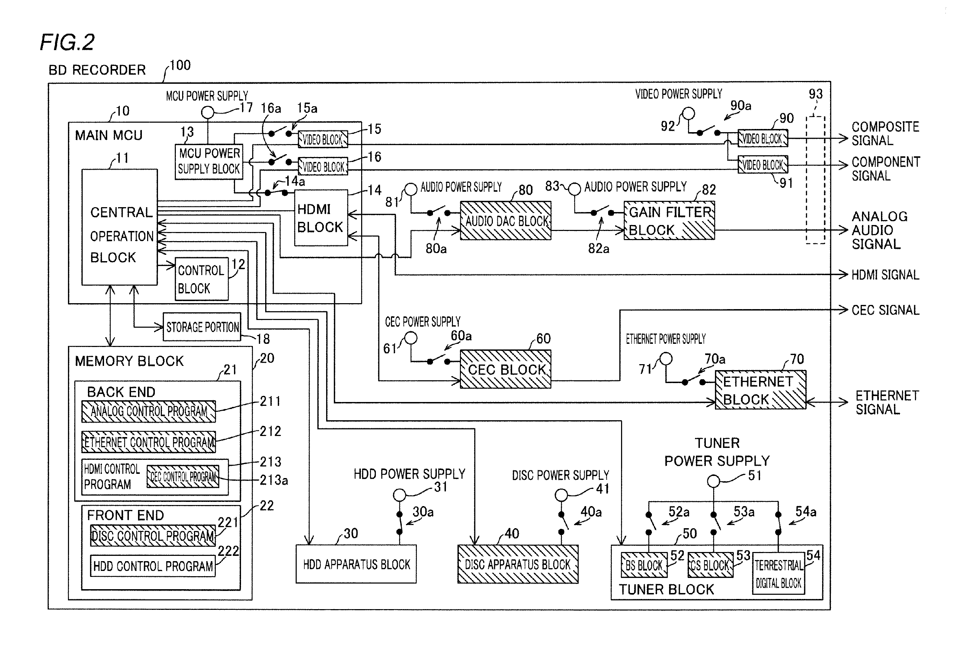

Next, the structure of the BD recorders 100 according to the first embodiment of the present invention is described with reference to Fig. 2.

Each BD recorder 100 includes a main MCU (microcontroller unit) 10, a storage portion 18, and a memory block 20, as shown in Fig. 2. Each BD recorder 100 further includes an HDD (hard disk drive) apparatus block 30, a DISC apparatus block 40, a tuner block 50, a CEC block 60, an Ethernet (registered trademark) block 70, an audio DAC block 80, a gain filter block 82, and video blocks 90 and 91 as functional blocks separated for each function. The main MCU 10 is an example of the "control portion" in the present invention. The HDD apparatus block 30, the DISC apparatus block 40, the tuner block 50, the CEC block 60, the Ethernet (registered trademark) block 70, the audio DAC block 80, the gain filter block 82, and the video blocks 90 and 91 are examples of the "functional block" in the present invention. In addition, the Ethernet (registered trademark) block 70 is an example of the "communication portion" in the present invention.

Each BD recorder 100 is provided with an MCU power supply 17, an HDD power supply 31, a DISC power supply 41, a tuner power supply 51, a CEC power supply 61, an Ethernet (registered trademark) power supply 71, audio power supplies 81 and 83, and a video power supply 92. Furthermore, each BD recorder 100 is provided with power switches 30a, 40a, 52a, 53a, 54a, 60a, 70a, 80a, 82a, and 90a constituted by transistors. In addition, each BD recorder 100 is provided with a cable detection portion 93.

Each BD recorder 100 according to the first embodiment is configured to be switchable to an operating mode state including a power ON state, a function operating state, a standby state, a quick start standby state, a recording state during a standby period, and a power OFF state. The power ON state is a state where a main power supply of the BD recorder 100 is turned on and the start processing of each functional block is completed. The function operating state is a state where the functional blocks function. For example, the function operating state is a state where the DISC apparatus block 40 functions by playing back a disc. The standby state is a standby state where minimum functions such as a timer and a photoreceiving portion of a remote controller are maintained. The quick start standby state is a state where the BD recorder 100 enters the power ON state immediately after the operation of a user is accepted, for example. Specifically, the quick start standby state is a standby state where a part of the functional blocks such as the HDD apparatus block 30 is activated. The recording state during a standby period is a state where functional blocks necessary for recording are activated and a recording is made during a standby period. The power OFF state is a state where the main power supply is turned off and no power is supplied to any functional blocks. The power ON state, the function operating state, the standby state, the quick start standby state, and the recording state during a standby period are states where power is supplied to at least one functional block of the BD recorder 100.

The main MCU 10 includes a central operation block 11, a control block 12, an MCU power supply block 13, an HDMI (High-Definition Multimedia Interface) block 14, and video blocks 15 and 16, as shown in Fig. 2. In addition, the main MCU 10 is provided with power switches 14a, 15a, and 16a. The HDMI block 14 and the video blocks 15 and 16 are examples of the "functional block" in the present invention.

The central operation block 11 is configured to control each part of the BD recorder 100. Specifically, the central operation block 11 is configured to control each part of the BD recorder 100 by developing various programs, using an area of the memory block 20. Furthermore, the central operation block 11 is configured to decode and encode a picture signal in order to record and play back a picture. In addition, the central operation block 11 is configured to transmit and receive an HDMI signal including information such as a digital image and digital sound through the HDMI block 14. Moreover, the central operation block 11 is configured to transmit and receive a CEC (Consumer Electronics Control) signal including a control signal for cooperating with another apparatus through the HDMI block 14 and the CEC block 60.

The central operation block 11 is configured to transmit and receive a composite signal of an analog image through the video blocks 15 and 90. Furthermore, the central operation block 11 is configured to transmit and receive a component signal of an analog image through the video blocks 16 and 91. In addition, the central operation block 11 is configured to transmit and receive an analog audio signal through the audio DAC block 80 and the gain filter block 82.

According to the first embodiment, the central operation block 11 is configured to control the control block 12 to switch ON/OFF of the power switches 14a, 15a, 16a, 30a, 40a, 52a, 53a, 54a, 60a, 70a, 80a, 82a, and 90a and control power supplied to each functional block. For example, the central operation block 11 performs control of turning on the power switches 14a, 30a, and 54a in an example shown in Fig 2. Thus, power is supplied to each of the HDMI block 14, the HDD apparatus block 30, and a terrestrial digital block 54 of the tuner block 50. On the other hand, the central operation block 11 performs control of turning off the power switches 15a, 16a, 40a, 52a, 53a, 60a, 70a, 80a, 82a, and 90a. Thus, power supplied to the video blocks 15 and 16, the DISC apparatus block 40, a BS block 52 of the tuner block 50, a CS block 53 of the tuner block 50, the CEC block 60, the Ethernet (registered trademark) block 70, the audio DAC block 80, the gain filter block 82, the video blocks 90 and 91, all of which are hatched, is disconnected, as shown in Fig. 2.

The central operation block 11 is configured to acquire use tendency information of the functional blocks on the basis of the lengths of time the functional blocks function, the numbers of times the functional blocks are used, validity/invalidity of the functional blocks, or the amounts of processed information of the functional blocks. Specifically, the central operation block 11 is configured to acquire use tendency information of the HDD apparatus block 30 and the tuner block 50 on the basis of the lengths of time the HDD apparatus block 30 and the tuner block 50 function. In addition, the central operation block 11 is configured to acquire use tendency information of the DISC apparatus block 40 on the basis of the number of times the DISC apparatus block 40 plays back the disc.

The central operation block 11 is configured to detect the presence of cables connected to the video blocks 15 and 16, the audio DAC block 80, the gain filter block 82, and the video blocks 90 and 91, respectively by the cable detection portion 93, determine validity/invalidity of the functions of the video blocks 15 and 16, the audio DAC block 80, the gain filter block 82, and the video blocks 90 and 91, and acquire use tendency information thereof. Furthermore, the central operation block 11 is configured to detect the presence of an antenna connected to the tuner block 50, determine validity/invalidity of the function of the tuner block 50, and acquire use tendency information thereof. In addition, the central operation block 11 is configured to acquire use tendency information of the HDMI block 14, the CEC block 60, and the Ethernet (registered trademark) block 70 on the basis of the data communication quantities (amounts of processed information) of the HDMI block 14, the CEC block 60, and the Ethernet (registered trademark) block 70.

The central operation block 11 is configured to accumulate and store the use states of a plurality of functional blocks in the storage portion 18. Specifically, the central operation block 11 is configured to accumulate and store the lengths of time the functional blocks function, the numbers of times the functional blocks are used, validity/invalidity of the functional blocks, or the amounts of processed information of the functional blocks in the storage portion 18. Furthermore, the central operation block 11 is configured to acquire the use tendency information of the plurality of functional blocks on the basis of the use states of the plurality of functional blocks accumulated in the storage portion 18, respectively.

The central operation block 11 is configured to acquire the use tendency information of the plurality of functional blocks on the basis of the use states of the plurality of functional blocks accumulated in a prescribed period of time (one week, for example). Moreover, the central operation block 11 is configured to acquire the use tendency information of the plurality of functional blocks on the basis of the use states of the plurality of functional blocks accumulated in a prescribed time zone (morning/afternoon/midnight, weekdays/holidays, or the like, for example).

According to the first embodiment, the central operation block 11 is configured to perform control of disconnecting power supplied to a functional block whose usage rate is not more than a prescribed usage rate, tending to be disused, of the plurality of functional blocks in a state where power is supplied to at least one functional block of the BD recorder 100 on the basis of the use tendency information of the plurality of function blocks. Specifically, the central operation block 11 is configured to perform control of disconnecting power supplied to a functional block whose functional time is not more than a certain fraction of time, a functional block whose usage frequency is not more than a certain fraction, a functional block connected with a cable for a validity time or with a validity frequency of not more than a certain fraction, and a functional block whose amount of processed information is not more than a certain fraction on the basis of the use tendency information of the functional blocks accumulated in the storage portion 18. The tendency to be disused includes not only a completely disused state but also a state of tending to be low in usage rate where the usage rate is not more than the prescribed rate.

The central operation block 11 is configured to perform control of disconnecting power supplied to the functional block tending to be disused in the state where power is supplied to at least one functional block of the BD recorder 100 on the basis of the control signal from the host computer based on the use tendency information of the plurality of functional blocks.

The central operation block 11 is configured to control development of a program for controlling the functional block whose usage rate is not more than the prescribed usage rate, tending to be disused, of the plurality of functional blocks in the state where power is supplied to at least one functional block of the BD recorder 100 on the basis of the use tendency information of the plurality of functional blocks. Specifically, the central operation block 11 is configured to perform control of not developing the program for controlling the functional block tending to be disused or developing only a pre-program.

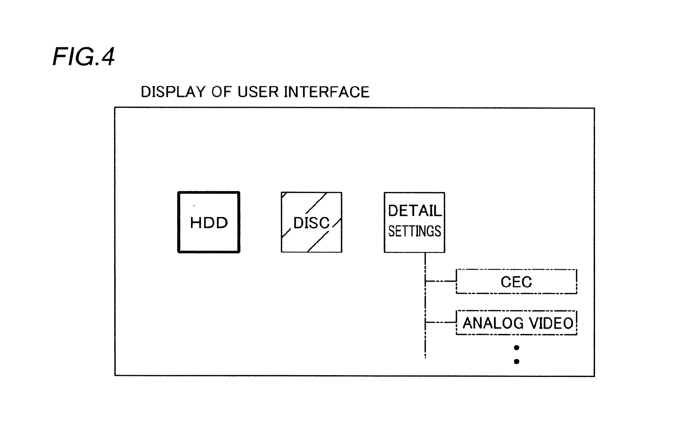

The central operation block 11 is configured to perform control of lowering the priority of display of a user interface for operating the functional block tending to be disused on the basis of the use tendency information of the plurality of functional blocks. Specifically, the central operation block 11 performs control of hiding the display of the user interface of the functional block tending to be disused, gray-displaying the same, displaying the same while lowing the hierarchy, or displaying the same as a detail settings group. On the other hand, the central operation block 11 performs control of highlighting display of a user interface of a functional block tending to be used, displaying the user interface of the functional block tending to be used while raising the hierarchy, or default displaying the user interface of the functional block tending to be used. For example, the central operation block 11 performs control of highlighting display of a user interface of the HDD apparatus block 30 tending to be used, as shown in Fig. 4. In addition, the central operation block 11 performs control of gray-displaying a user interface of the DISC apparatus block 40 tending to be disused and displaying user interfaces of the CEC block 60, the video blocks 15, 16, 90, and 91, etc. tending to be disused in a low hierarchy group of the detail settings. Thus, the user interfaces are so organized that the user can easily operate the functional block tending to be used which the user frequently uses.

The MCU power supply block 13 is configured to control power supplied from the MCU power supply 17. Furthermore, the MCU power supply block 13 is configured to supply power to the HDMI block 14 and the video blocks 15 and 16 through the power switches 14a, 15a, and 16a, respectively.

The storage portion 18 includes a nonvolatile memory and is configured to store and accumulate the use states of the plurality of functional blocks.

The memory block 20 includes a volatile memory and is configured to be capable of developing programs for controlling the functional blocks. Furthermore, the memory block 20 includes a back end 21 and a front end 22, as shown in Fig. 2. The back end 21 is configured to be capable of developing an analog control program 211, an Ethernet (registered trademark) control program 212, and an HDMI control program 213. The HDMI control program 213 includes a CEC control program 213a. The front end 22 is configured to be capable of developing a DISC control program 221 and an HDD control program 222.

The analog control program 211 is used to control the video blocks 15 and 16, the audio DAC block 80, the gain filter block 82, and the video blocks 90 and 91. The Ethernet (registered trademark) control program 212 is used to control the Ethernet (registered trademark) block 70. The HDMI control program 213 is used to control the HDMI block 14. The CEC control program 213a is used to control the CEC block 60.

The DISC control program 221 is used to control the DISC apparatus block 40. The HDD control program 222 is used to control the HDD apparatus block 30.

In the example shown in Fig 2, power is supplied to the HDMI block 14. Thus, the HDMI control program 213 of the memory block 20 is developed by the central operation block 11. Furthermore, power is supplied to the HDD apparatus block 30. Thus, the HDD control program 222 of the memory block 20 is developed by the central operation block 11.

In the example shown in Fig. 2, on the other hand, power supplied to the video blocks 15 and 16, the audio DAC block 80, the gain filter block 82, and the video blocks 90 and 91 is disconnected. Thus, the analog control program 211 of the memory block 20 is not developed, or only a pre-program is developed by the central operation block 11. In addition, power supplied to the Ethernet (registered trademark) block 70 is disconnected. Thus, the Ethernet (registered trademark) control program 212 of the memory block 20 is not developed, or only a pre-program is developed by the central operation block 11.

Furthermore, power supplied to the CEC block 60 is disconnected. Thus, the CEC control program 213a of the memory block 20 is not developed, or only a pre-program is developed by the central operation block 11. In addition, power supplied to the DISC apparatus block 40 is disconnected. Thus, the DISC control program 221 of the memory block 20 is not developed, or only a pre-program is developed by the central operation block 11.

The HDD apparatus block 30 is configured to store a recorded picture. Furthermore, the HDD apparatus block 30 is connected to the central operation block 11 of the main MCU 10. In addition, the HDD apparatus block 30 is so configured that power is supplied thereto from the HDD power supply 31 through the power switch 30a.

The DISC apparatus block 40 is configured to play back a picture recorded in a medium such as a BD (Blu-ray Disc) or a DVD (digital versatile disc). Furthermore, the DISC apparatus block 40 is configured to record (write) a picture in the medium such as a BD or a DVD. In addition, the DISC apparatus block 40 is connected to the central operation block 11 of the main MCU 10. Moreover, the DISC apparatus block 40 is so configured that power is supplied thereto from the DISC power supply 41 through the power switch 40a.

The tuner block 50 is configured to receive television broadcasting. The tuner block 50 includes the BS (broadcast satellite) block 52, the CS (communications satellite) block 53, and the terrestrial digital block 54, as shown in Fig. 2. The BS block 52, the CS block 53, and the terrestrial digital block 54 are examples of the "functional block" in the present invention.

The BS block 52 is configured to be capable of receiving BS broadcasting. In addition, the BS block 52 is so configured that power is supplied thereto from the tuner power supply 51 through the power switch 52a. The CS block 53 is configured to be capable of receiving CS broadcasting. In addition, the CS block 53 is so configured that power is supplied thereto from the tuner power supply 51 through the power switch 53a. The terrestrial digital block 54 is configured to be capable of receiving terrestrial digital broadcasting. In addition, the terrestrial digital block 54 is so configured that power is supplied thereto from the tuner power supply 51 through the power switch 54a. In this manner, the tuner block 50 as the functional block is subdivided into the functional blocks of the BS block 52, the CS block 53, and the terrestrial digital block 54, whereby the functional blocks can be finely controlled to reduce power consumption efficiently even if the presence and absence of use of the functional blocks are divided by function.

The CEC block 60 is configured to transmit and receive a CEC signal to control apparatuses connected by an HDMI-standard cable. The CEC block 60 is connected to the HDMI block 14 of the main MCU 10. In addition, the CEC block 60 is so configured that power is supplied thereto from the CEC power supply 61 through the power switch 60a.

The Ethernet (registered trademark) block 70 is configured to transmit and receive an Ethernet (registered trademark) signal to communicate with an external network. The Ethernet (registered trademark) block 70 is connected to the central operation block 11 of the main MCU 10. Furthermore, the Ethernet (registered trademark) block 70 is configured to be capable of transmitting the use tendency information of the plurality of functional blocks stored in the storage portion 18 to the host computer 2 or 3 through the network. In addition, the Ethernet (registered trademark) block 70 is configured to be capable of receiving the control signal from the host computer 2 or 3 through the network. Moreover, the Ethernet (registered trademark) block 70 is so configured that power is supplied thereto from the Ethernet (registered trademark) power supply 71 through the power switch 70a.

The audio DAC block 80 is configured to convert a digital sound signal input from the central operation block 11 into an analog signal and output the analog signal to the gain filter block 82. In addition, the audio DAC block 80 is so configured that power is supplied thereto from the audio power supply 81 through the power switch 80a.

The gain filter block 82 is configured to amplify the analog sound signal input from the audio DAC block 80, remove noise or the like, and output the analog audio signal. In addition, the gain filter block 82 is so configured that power is supplied thereto from the audio power supply 83 through the power switch 82a.

The video block 90 is configured to transmit the composite signal of the analog image on the basis of an image signal output from the video block 15 of the main MCU 10. The Video block 91 is configured to transmit the component signal of the analog image on the basis of an image signal output from the video block 16 of the main MCU 10. Furthermore, the video blocks 90 and 91 each are so configured that power is supplied thereto from the video power supply 92 through the power switch 90a. In other words, the power supplied to the video blocks 90 and 91 having similar functions to each other can be controlled with the common power switch 90a.

The cable detection portion 93 is configured to detect the presence of the cables connected to the gain filter block 82 and the video blocks 90 and 91, respectively. In other words, the cable detection portion 93 detects whether or not the cables are inserted into terminals transmitting and receiving analog sound and images.

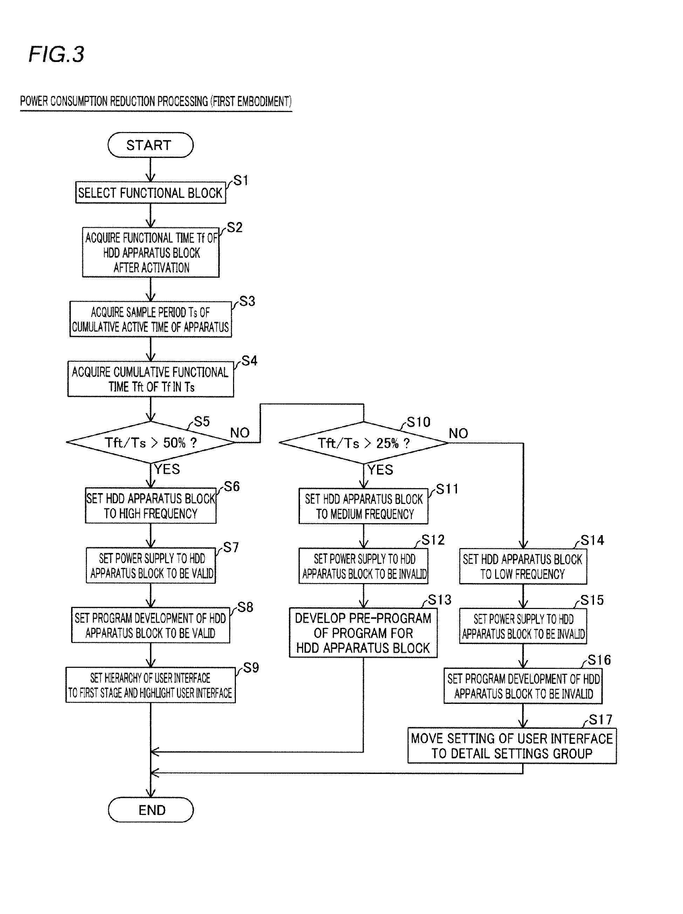

Next, power consumption reduction processing performed by the main MCU 10 of the BD recorder 100 is described with reference to Fig. 3.

The BD recorder 100 is started, and in prescribed timing, the main MCU 10 selects a functional block on which the processing is performed from the plurality of functional blocks at a step S1. Here, it is assumed that the main MCU 10 selects the HDD apparatus block 30 as the functional block on which the processing is performed. The similar processing is performed also on other functional blocks. The main MCU 10 acquires a functional time Tf which is the length of time the HDD apparatus block 30 functions after the BD recorder 100 is started at a step S2. The main MCU 10 stores the acquired functional time Tf in the storage portion 18. The main MCU 10 acquires a sample period Ts as a cumulative active time of the BD recorder 100 at a step S3. Specifically, the main MCU 10 adds up time when the BD recorder 100 is active in a certain period of time (one week, for example) to acquire the sample period Ts.

The main MCU 10 acquires a cumulative functional time Tft which is a cumulative time of functional times Tf in the sample period Ts at a step S4. In other words, the main MCU 10 calculates and acquires the cumulative functional time Tft which is a cumulative time of the lengths of time the HDD apparatus block 30 functions in the certain period of time (one week, for example). Specifically, the main MCU 10 acquires the cumulative functional time Tft accumulated and stored in the storage portion 18. The main MCU 10 determines whether or not Tft/Ts is greater than 50% at a step S5. In other words, the main MCU 10 determines whether or not the HDD apparatus block 30 has been used for a period of time longer than 50% in the sample period Ts. When Tft/Ts is greater than 50%, the main MCU 10 advances to a step S6, and when Tft/Ts is not greater than 50%, the main MCU 10 advances to a step S10.

The main MCU 10 sets the HDD apparatus block 30 to high frequency at the step S6. Thus, the HDD apparatus block 30 is so set that the function thereof is constantly valid. The main MCU 10 sets power supply to the HDD apparatus block 30 to be valid at a step S7. Specifically, the main MCU 10 turns on the power switch 30a by the control block 12 and performs control of supplying power to the HDD apparatus block 30 from the HDD power supply 31.

The main MCU 10 sets program development of the HDD apparatus block 30 to be valid at a step S8. Specifically, the main MCU 10 develops the HDD control program 222 in the front end 22 of the memory block 20. The main MCU 10 performs control of setting the hierarchy of the user interface of the HDD apparatus block 30 to the first stage and highlighting the user interface of the HDD apparatus block 30 at a step S9. Thus, the user can easily access the user interface to operate the frequently used HDD apparatus block 30. Thereafter, the main MCU 10 terminates the power consumption reduction processing.

When determining that Tft/Ts is not greater than 50% at the step S5, the main MCU 10 determines whether or not Tft/Ts is greater than 25% at the step S10. In other words, the main MCU 10 determines whether or not the HDD apparatus block 30 has been used for a period of time longer than 25% and not greater than 50% in the sample period Ts. When Tft/Ts is greater than 25%, the main MCU 10 advances to a step S11, and when Tft/Ts is not greater than 25%, the main MCU 10 advances to a step S14.

According to the first embodiment, the main MCU 10 sets the HDD apparatus block 30 to medium frequency at the step S11. The main MCU 10 sets power supply to the HDD apparatus block 30 to be invalid at a step S12. Specifically, the main MCU 10 turns off the power switch 30a by the control block 12 and performs control of disconnecting power supplied to the HDD apparatus block 30 from the HDD power supply 31. In other words, the main MCU 10 performs control of disconnecting the power supplied to the HDD apparatus block 30 tending to be disused on the basis of the use tendency information of the HDD apparatus block 30. If the HDD apparatus block 30 is used by the operation of the user afterwards, power is supplied to the HDD apparatus block 30 from the HDD power supply 31.

The main MCU 10 develops only the pre-program of the program for the HDD apparatus block 30 at a step S13. Specifically, the main MCU 10 develops only the pre-program of the HDD control program 222 in the front end 22 of the memory block 20. Thus, the HDD control program 222 can be developed quickly when the HDD apparatus block 30 is started by the operation of the user. Thereafter, the main MCU 10 terminates the power consumption reduction processing.

When determining that Tft/Ts is not greater than 25% at the step S10, the main MCU 10 sets the HDD apparatus block 30 to low frequency at the step S14.

According to the first embodiment, power supply to the HDD apparatus block 30 is set to be invalid at a step S15. Specifically, the main MCU 10 turns off the power switch 30a by the control block 12 and performs control of disconnecting the power supplied to the HDD apparatus block 30 from the HDD power supply 31. In other words, the main MCU 10 performs control of disconnecting the power supplied to the HDD apparatus block 30 tending to be disused on the basis of the use tendency information of the HDD apparatus block 30. When the HDD apparatus block 30 is used by the operation of the user afterwards, power is supplied to the HDD apparatus block 30 from the HDD power supply 31.

The main MCU 10 sets program development of the HDD apparatus block 30 to be invalid at a step S16. Specifically, the main MCU 10 does not develop the HDD control program 222 in the front end 22 of the memory block 20. The main MCU 10 performs control of displaying the user interface of the HDD apparatus block 30 as the detail settings group at a step S17. Thereafter, the main MCU 10 terminates the power consumption reduction processing. In this manner, according to the first embodiment, the main MCU 10 is configured to be capable of controlling the functional block to be in an intermediate state where power supply is disconnected and only the pre-program is developed during a state where the presence and absence of power supply and the presence and absence of development of the program are controlled on the basis of the cumulative functional time Tft.

According to the first embodiment, as hereinabove described, the BD recorder 100 is provided with the main MCU 10 performing control of disconnecting the power supplied to the functional block whose usage rate is not more than the prescribed usage rate, tending to be disused, of the plurality of functional blocks in the state where power is supplied to at least one functional block. Thus, power supply to the functional block tending to be disused can be disconnected while power supply to the functional block tending to be used is continued, and hence power consumption in the state where power is supplied to at least one functional block of the BD recorder 100 can be reduced. Furthermore, the power supplied to the functional block having a function which the user uses only at not more than the prescribed usage rate can be disconnected in the state where power is supplied to at least one functional block, and hence power consumption of the BD recorder 100 can be reduced without reducing user's convenience. In addition, the functional block tending to be disused is not activated, and hence an area for developing the program starting the functional block tending to be disused can be opened up to another functional block tending to be used, so that processing load on the main MCU 10 can be reduced. Moreover, power is not supplied to the functional block tending to be disused, and hence heat generation resulting from power distribution can be reduced. Thus, the lifetime of the BD recorder 100 can be increased. Besides, the main MCU 10 is configured to acquire the use tendency information of the plurality of functional blocks on the basis of the use states of the plurality of functional blocks accumulated in the storage portion 18, respectively, whereby the use tendency information of the plurality of functional blocks can be easily acquired on the basis of the use states of the plurality of functional blocks accumulated in the storage portion 18, respectively.

According to the first embodiment, as hereinabove described, the main MCU 10 is configured to determine tendency to be disused by acquiring the use tendency information of the functional blocks on the basis of the lengths of time the HDD apparatus block 30 and the tuner block 50 function, the number of times the DISC apparatus block 40 plays back the disc, the presence of the connected cables or the antenna, or the data communication quantities of the HDMI block 14, the CEC block 60, and the Ethernet (registered trademark) block 70. Thus, tendency to be disused according to the actual use state of the user can be easily determined on the basis of the use tendency information.

According to the first embodiment, as hereinabove described, the main MCU 10 is configured to determine tendency to be disused by acquiring the use tendency information of the plurality of functional blocks on the basis of the use states of the plurality of functional blocks accumulated in the prescribed period of time (one week, for example). Thus, tendency to be disused according to the actual use state of the user can be accurately determined on the basis of the use states of the plurality of functional blocks accumulated in the prescribed period of time (one week, for example).

According to the first embodiment, as hereinabove described, the main MCU 10 is configured to perform control of disconnecting the power supplied to the functional block whose usage rate is not more than the prescribed usage rate with respect to the usage times of the functions, the usage frequencies of the functions, the validity times or validity frequencies of the functions, and the amounts of processed information, tending to be disused, of the plurality of functional blocks. Thus, power supply to the functional block whose usage rate is not more than the prescribed usage rate with respect to the usage times of the functions, the usage frequencies of the functions, the validity times or validity frequencies of the functions, and the amounts of processed information, tending to be disused can be disconnected, and hence power consumption in the state where power is supplied to the functional blocks of the electronic apparatus can be easily reduced without reducing user's convenience.

According to the first embodiment, as hereinabove described, the main MCU 10 is configured to perform control of hiding the display of the user interface for operating the functional block tending to be disused of the plurality of functional blocks, gray-displaying the same, displaying the same while lowing the hierarchy, or displaying the same as the detail settings group on the basis of the use tendency information of the plurality of functional blocks. Thus, the user interfaces are so organized that the display of the user interface for operating the functional block tending to be disused is hidden or the like to be inconspicuous, and hence the user can easily access the user interface for operating the functional block tending to be used.

According to the first embodiment, as hereinabove described, the main MCU 10 is configured to control the power switches 14a, 15a, 16a, 30a, 40a, 52a, 53a, 54a, 60a, 70a, 80a, 82a, and 90a to control the power supplied to the functional block tending to be disused. Thus, the power switches 14a, 15a, 16a, 30a, 40a, 52a, 53a, 54a, 60a, 70a, 80a, 82a, and 90a are controlled, whereby the power supplied to the functional block tending to be disused can be easily disconnected.

According to the first embodiment, as hereinabove described, the main MCU 10 is configured to perform control of disconnecting the power supplied to the video blocks 90 and 91 which are similar to each other by controlling the common power switch 90a. Thus, the common power switch 90a can be provided with respect to the video blocks 90 and 91 which are similar to each other, and hence the structure of the BD recorder 100 can be simplified as compared with a case where power switches are provided separately with respect to the video blocks 90 and 91.

According to the first embodiment, as hereinabove described, the Ethernet (registered trademark) block 70 capable of transmitting the use tendency information to the host computer 2 or 3 through the network is provided in the BD recorder 100. Thus, the use tendency information of the BD recorder 100 is collected in the host computer 2 or 3, and hence the host computer 2 or 3 can feed back a result of analysis of the use tendency of the BD recorder 100 to development of a next-generation BD recorder 100. When use tendency in which analog or HDMI sound and images are transmitted and received is obtained on the basis of the use tendency information of the BD recorder 100 acquired by the host computer 2 or 3, for example, the BD recorder 100 can be so designed that the functional blocks (the video blocks 15 and 16, the audio DAC block 80, the gain filter block 82, and the video blocks 90 and 91) to transmit and receive the analog sound and images are controlled with a common switch and the functional blocks (the HDMI block 14 and the CEC block 60) to transmit and receive the HDMI sound and images are controlled with a common switch. Thus, the structure of the BD recorder 100 can be simplified. Furthermore, in this case, the BD recorder 100 may be so designed that either the functional blocks to transmit and receive the analog sound and images or the functional blocks to transmit and receive the HDMI sound and images is selected to supply power.

According to the first embodiment, as hereinabove described, the main MCU 10 is configured to perform control of disconnecting the power supplied to the functional block tending to be disused of the plurality of functional blocks in the state where power is supplied to at least one functional block on the basis of the control signal received through the Ethernet (registered trademark) block 70. Thus, the host computer 2 or 3 can consolidate control of disconnecting the power supplied to the functional blocks tending to be disused of the plurality of BD recorders 100 connected to the host computer 2 or 3, and hence power consumption of the plurality of BD recorders 100 can be effectively reduced.

### (Second Embodiment)

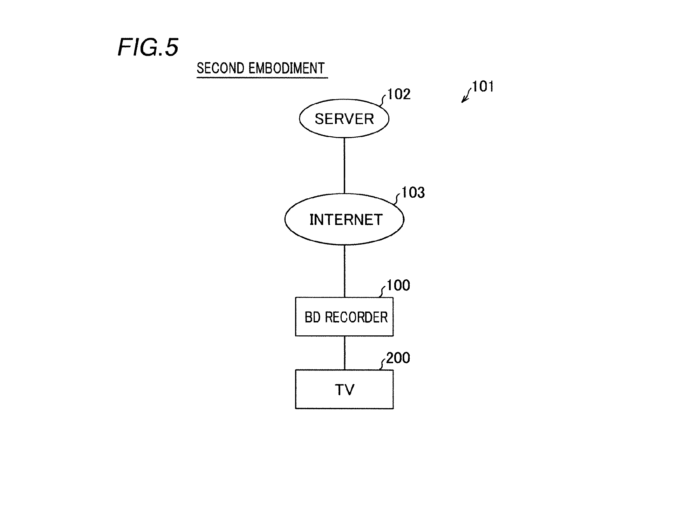

An electronic apparatus management system 101 according to a second embodiment of the present invention is now described with reference to Figs. 5 to 10. A BD recorder 100 of the electronic apparatus management system 101 according to the second embodiment has the following functions in addition to the functions of the BD recorder 100 according to the first embodiment.

First, the structure of the electronic apparatus management system 101 according to the second embodiment of the present invention is described with reference to Fig. 5.

The electronic apparatus management system 101 includes a server 102, the BD (Blu-ray Disc) recorder 100, and a TV (television set) 200, as shown in Fig. 5. The BD recorder 100 is connected to the server 102 through the Internet 103. The BD recorder 100 is an example of the "electronic apparatus" in the present invention, and the TV 200 is an example of the "display device" in the present invention.

The server 102 is configured to be capable of communicating with the BD recorder 100 through the Internet 103. In addition, the server 102 is configured to be capable of transmitting an advertisement to the BD recorder 100 through the Internet 103. The BD recorder 100 is connected to the TV 200.

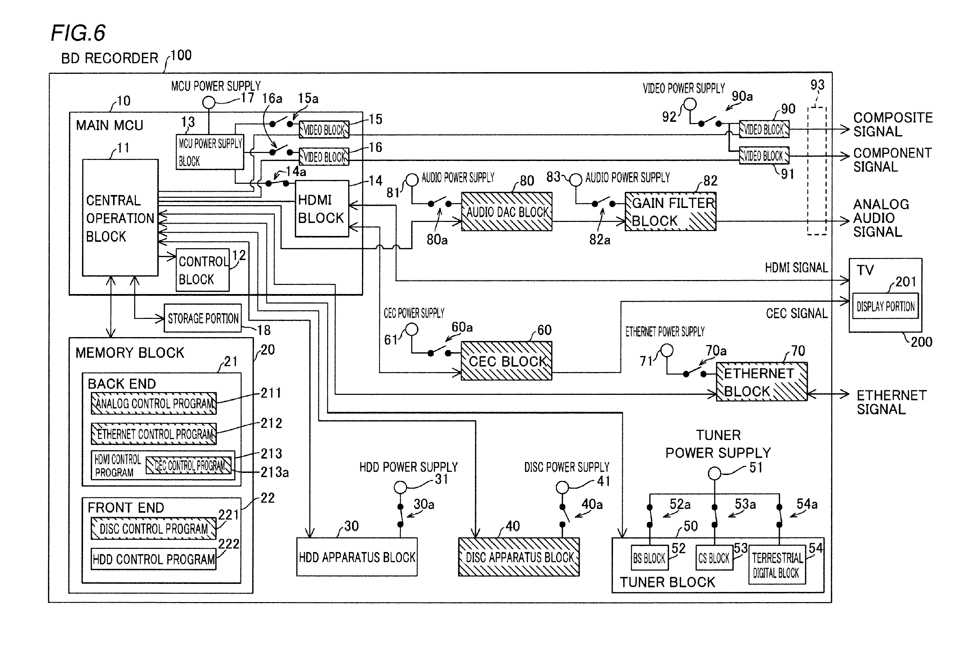

Next, the structure of the BD recorder 100 according to the second embodiment of the present invention is described with reference to Fig. 6.

The BD recorder 100 includes a main MCU (microcontroller unit) 10, a storage portion 18, and a memory block 20, as shown in Fig. 6. The BD recorder 100 further includes an HDD (hard disk drive) apparatus block 30, a DISC apparatus block 40, a tuner block 50, a CEC block 60, an Ethernet (registered trademark) block 70, an audio DAC block 80, a gain filter block 82, and video blocks 90 and 91 as functional blocks separated for each function. The main MCU 10 is an example of the "control portion" in the present invention. The HDD apparatus block 30, the DISC apparatus block 40, the tuner block 50, the CEC block 60, the Ethernet (registered trademark) block 70, the audio DAC block 80, the gain filter block 82, and the video blocks 90 and 91 are examples of the "functional block" in the present invention.

The BD recorder 100 is provided with an MCU power supply 17, an HDD power supply 31, a DISC power supply 41, a tuner power supply 51, a CEC power supply 61, an Ethernet (registered trademark) power supply 71, audio power supplies 81 and 83, and a video power supply 92. Furthermore, the BD recorder 100 is provided with power switches 30a, 40a, 52a, 53a, 54a, 60a, 70a, 80a, 82a, and 90a constituted by transistors. In addition, the BD recorder 100 is provided with a cable detection portion 93.

The main MCU 10 includes a central operation block 11, a control block 12, an MCU power supply block 13, an HDMI (High-Definition Multimedia Interface) block 14, and video blocks 15 and 16, as shown in Fig. 6. In addition, the main MCU 10 is provided with power switches 14a, 15a, and 16a. The HDMI block 14 and the video blocks 15 and 16 are examples of the "functional block" in the present invention.

The central operation block 11 is configured to control each part of the BD recorder 100. Specifically, the central operation block 11 is configured to control each part of the BD recorder 100 by developing various programs, using an area of the memory block 20. Furthermore, the central operation block 11 is configured to decode and encode a picture signal in order to record and play back a picture. In addition, the central operation block 11 is configured to transmit and receive an HDMI signal including information such as a digital image and digital sound through the HDMI block 14. Moreover, the central operation block 11 is configured to transmit and receive a CEC (Consumer Electronics Control) signal including a control signal for cooperating with another apparatus through the HDMI block 14 and the CEC block 60.

The central operation block 11 is configured to transmit and receive a composite signal of an analog image through the video blocks 15 and 90. Furthermore, the central operation block 11 is configured to transmit and receive a component signal of an analog image through the video blocks 16 and 91. In addition, the central operation block 11 is configured to transmit and receive an analog audio signal through the audio DAC block 80 and the gain filter block 82.

The central operation block 11 is configured to control the control block 12 to switch ON/OFF of the power switches 14a, 15a, 16a, 30a, 40a, 52a, 53a, 54a, 60a, 70a, 80a, 82a, and 90a and control power supplied to each functional block. For example, the central operation block 11 performs control of turning on the power switches 14a, 30a, 52a, 53a, and 54a in an example shown in Fig 6. Thus, power is supplied to each of the HDMI block 14, the HDD apparatus block 30, a BS block 52, a CS block 53, and a terrestrial digital block 54 of the tuner block 50. On the other hand, the central operation block 11 performs control of turning off the power switches 15a, 16a, 40a, 60a, 70a, 80a, 82a, and 90a. Thus, power supplied to the video blocks 15 and 16, the DISC apparatus block 40, the CEC block 60, the Ethernet (registered trademark) block 70, the audio DAC block 80, the gain filter block 82, and the video blocks 90 and 91, all of which are hatched, is disconnected, as shown in Fig. 6.

The central operation block 11 is configured to acquire use status information regarding the use tendencies and use states of the functional blocks. Specifically, the central operation block 11 is configured to acquire use status information regarding the use tendencies of the HDD apparatus block 30 and the tuner block 50 on the basis of the lengths of time the HDD apparatus block 30 and the tuner block 50 function. In addition, the central operation block 11 is configured to acquire use status information regarding the use tendency of the DISC apparatus block 40 on the basis of the number of times (usage frequency) the DISC apparatus block 40 plays back the disc. Moreover, the central operation block 11 is configured to acquire use status information regarding the use state of the DISC apparatus block 40 on the basis of whether or not a disc such as a BD (Blu-ray Disc) in the DISC apparatus block 40 remains untouched for a long time. The disc is an example of the "record medium" in the present invention.

The central operation block 11 is configured to detect the presence of cables connected to the video blocks 15 and 16, the audio DAC block 80, the gain filter block 82, and the video blocks 90 and 91, respectively by the cable detection portion 93 and acquire use status information regarding the use states of the video blocks 15 and 16, the audio DAC block 80, the gain filter block 82, and the video blocks 90 and 91. Furthermore, the central operation block 11 is configured to detect the presence of an antenna connected to the tuner block 50 and acquire use status information regarding the use state of the tuner block 50. In addition, the central operation block 11 is configured to acquire use status information regarding the use tendencies of the HDMI block 14, the CEC block 60, and the Ethernet (registered trademark) block 70 on the basis of the data communication quantities (amounts of processed information) of the HDMI block 14, the CEC block 60, and the Ethernet (registered trademark) block 70.

The central operation block 11 is configured to accumulate and store the use status information of a plurality of functional blocks in the storage portion 18. Specifically, the central operation block 11 is configured to accumulate and store the lengths of time the functional blocks function, the numbers of times the functional blocks are used, validity/invalidity of the functional blocks, or the amounts of processed information of the functional blocks in the storage portion 18. Furthermore, the central operation block 11 is configured to acquire the use tendencies of the functional blocks on the basis of results of accumulation of the use states of the plurality of functional blocks.

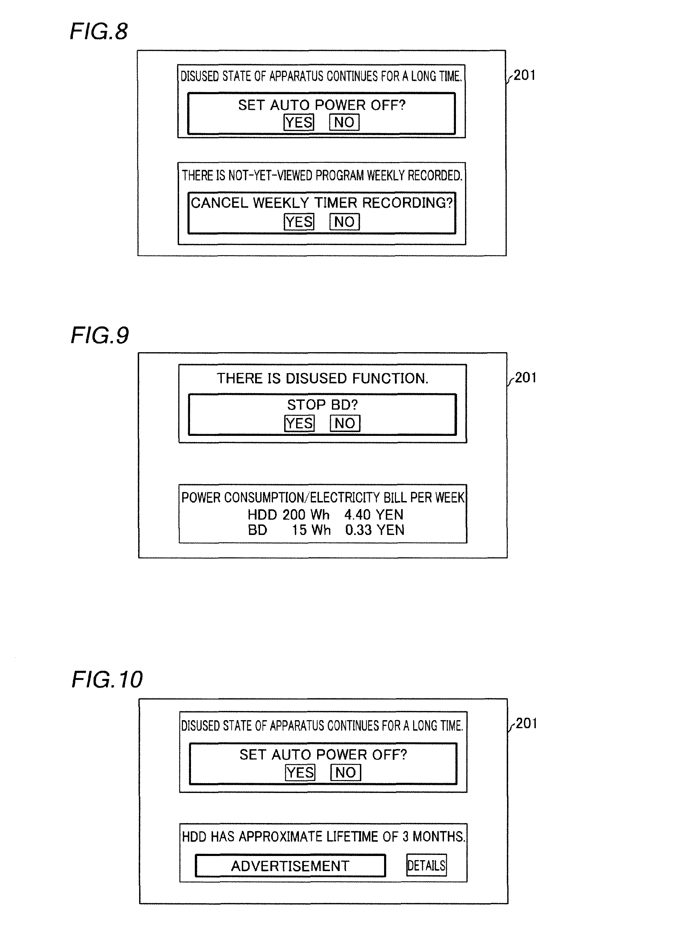

According to the second embodiment, the central operation block 11 is configured to perform control of outputting notification information for instructing a user to operate the plurality of functional blocks to the TV 200 through the HDMI block 14. Thus, a screen (see Figs. 8 to 10) for instructing the user to operate the functional blocks is displayed (notified) on a display portion 201 (see Fig. 6) of the TV 200. The central operation block 11 is configured to properly notify the user to operate the functional blocks with a sound from a speaker (not shown) of the TV 200 in accordance with notification on the screen of the TV 200.

Furthermore, according to the second embodiment, the central operation block 11 is configured to notify the user to operate a functional block corresponding to a prescribed use status on the basis of the use status information regarding the use tendencies or the use states of the plurality of functional blocks accumulated in the storage portion 18. The prescribed use status includes statuses of a prescribed usage rate, a prescribed usage time, a prescribed usage frequency, an untouched state, and a prescribed use state of a record medium. Specifically, the central operation block 11 notifies the user to set auto power off on a functional block or the BD recorder 100 tending to be used, which is activated in a state where the same has not been used for a long time. Thus, the user can perform setting to automatically stop the functional block or the BD recorder 100 tending to be disused. The central operation block 11 is configured to notify the user to perform an operation of stopping the functional block whose usage rate is not more than the prescribed usage rate, tending to be disused. Furthermore, the central operation block 11 is configured to perform control of notifying the user of the presence of a not-yet-viewed program and notifying the user to perform an operation of viewing the not-yet-viewed program or an operation of canceling timer recording when there is a program timer-recorded every week, which has not been viewed yet, in the HDD apparatus block 30.

The central operation block 11 is configured to perform control of notifying the user that there is a disc remaining untouched when there is the disc such as a BD not played back for a long time to remain untouched in the DISC apparatus block 40 and notifying the user to perform an operation of ejecting the disc. Furthermore, the central operation block 11 is configured to perform control of notifying the user to view television broadcasting by receiving the television broadcasting directly by the TV 200 when the television broadcasting received by the tuner block 50 is output to the TV 200 through the HDMI block 14 for a long time and notifying the user to turn off the BD recorder 100. In addition, the central operation block 11 is configured to notify the user to perform an operation of stopping the BS block 52 and the CS block 53 when no antenna is connected to the BS block 52 or the CS block 53, for example.

The central operation block 11 is configured to perform control of notifying the user to operate the functional blocks on the basis of the use status information of the plurality of functional blocks and disconnecting power supplied to the functional block whose usage rate is not more than the prescribed usage rate, tending to be disused, of the plurality of functional blocks in normal operation of the BD recorder 100. Specifically, the central operation block 11 is configured to perform control of disconnecting power supplied to a functional block whose functional time is not more than a certain fraction of time, a functional block whose usage frequency is not more than a certain fraction, an invalid functional block not connected with a cable, or a functional block whose amount of processed information is not more than a certain fraction on the basis of the use status information of the functional blocks accumulated in the storage portion 18. The tendency to be disused includes not only a completely disused state but also a state of tending to be low in usage rate where the usage rate is not more than the prescribed rate.

The central operation block 11 is configured to notifying the user of the use status (the usage time, the usage rate, and the usage frequency) of each of the functional blocks, the power consumption of each of the functional blocks, the electricity bill of each of the functional blocks, or the approximate lifetime of each of the functional blocks on the basis of the use status information of the plurality of functional blocks. For example, the central operation block 11 performs control of displaying the power consumption and electricity bills per week of the HDD apparatus block 30 and the DISC apparatus block 40 on the display portion 201 of the TV 200, as shown in Fig. 9.

The central operation block 11 is configured to control development of a program for controlling the functional block whose usage rate is not more than the prescribed usage rate, tending to be disused, of the plurality of functional blocks in normal operation of the BD recorder 100 on the basis of the use status information of the plurality of functional blocks. Specifically, the central operation block 11 is configured to perform control of not developing the program for controlling the functional block tending to be disused or developing only a pre-program.

The central operation block 11 is configured to perform control of displaying guidance for operating a functional block in a prescribed use status on the basis of the use status information of the plurality of functional blocks. Specifically, the central operation block 11 performs control of highlighting the guidance for operating the functional block to instruct the user to operate the functional block (see Figs. 8 to 10). For example, the central operation block 11 performs control of highlighting setting of auto power off and setting of cancellation of weekly timer recording on the display portion 201 of the TV 200, as shown in Fig. 8.

The central operation block 11 is configured to receive the advertisement transmitted from the server 102 through the Internet 103 by the Ethernet (registered trademark) block 70 and display the advertisement on the display portion 201 of the TV 200. For example, the central operation block 11 performs control of notifying the user of the approximate lifetime of the HDD apparatus block 30 on the display portion 201 of the TV 200 and displaying the advertisement received from the server 102, as shown in Fig. 10. When selecting "details" shown in Fig. 10, the user jumps to the home page of the manufacturer and the details of a replacement HDD apparatus block 30 are displayed.

The MCU power supply block 13 is configured to control power supplied from the MCU power supply 17. Furthermore, the MCU power supply block 13 is configured to supply power to the HDMI block 14 and the video blocks 15 and 16 through the power switches 14a, 15a, and 16a, respectively.

The storage portion 18 includes a nonvolatile memory and is configured to store and accumulate the use status information of the plurality of functional blocks.

The memory block 20 includes a volatile memory and is configured to be capable of developing programs for controlling the functional blocks. Furthermore, the memory block 20 includes a back end 21 and a front end 22, as shown in Fig. 6. The back end 21 is configured to be capable of developing an analog control program 211, an Ethernet (registered trademark) control program 212, and an HDMI control program 213. The HDMI control program 213 includes a CEC control program 213a. The front end 22 is configured to be capable of developing a DISC control program 221 and an HDD control program 222.

The analog control program 211 is used to control the video blocks 15 and 16, the audio DAC block 80, the gain filter block 82, and the video blocks 90 and 91. The Ethernet (registered trademark) control program 212 is used to control the Ethernet (registered trademark) block 70. The HDMI control program 213 is used to control the HDMI block 14. The CEC control program 213a is used to control the CEC block 60.

The DISC control program 221 is used to control the DISC apparatus block 40. The HDD control program 222 is used to control the HDD apparatus block 30.

In the example shown in Fig 6, the HDMI control program 213 and the HDD control program 222 of the memory block 20 are developed by the central operation block 11.

In the example shown in Fig. 6, on the other hand, the analog control program 211, the Ethernet (registered trademark) control program 212, the CEC control program 213a, and the DISC control program 221 of the memory block 20, all of which are hatched, are not developed, or only pre-programs are developed by the central operation block 11.

The HDD apparatus block 30 is configured to store a recorded picture. Furthermore, the HDD apparatus block 30 is connected to the central operation block 11 of the main MCU 10. In addition, the HDD apparatus block 30 is so configured that power is supplied thereto from the HDD power supply 31 through the power switch 30a.

The DISC apparatus block 40 is configured to play back a picture recorded in a medium such as a BD (Blu-ray Disc) or a DVD (digital versatile disc). Furthermore, the DISC apparatus block 40 is configured to record (write) a picture in the medium such as a BD or a DVD. In addition, the DISC apparatus block 40 is connected to the central operation block 11 of the main MCU 10. Moreover, the DISC apparatus block 40 is so configured that power is supplied thereto from the DISC power supply 41 through the power switch 40a.

The tuner block 50 is configured to receive television broadcasting. The tuner block 50 includes the BS (broadcast satellite) block 52, the CS (communications satellite) block 53, and the terrestrial digital block 54, as shown in Fig. 6. The BS block 52, the CS block 53, and the terrestrial digital block 54 are examples of the "functional block" in the present invention.

The BS block 52 is configured to be capable of receiving BS broadcasting. In addition, the BS block 52 is so configured that power is supplied thereto from the tuner power supply 51 through the power switch 52a. The CS block 53 is configured to be capable of receiving CS broadcasting. In addition, the CS block 53 is so configured that power is supplied thereto from the tuner power supply 51 through the power switch 53a. The terrestrial digital block 54 is configured to be capable of receiving terrestrial digital broadcasting. In addition, the terrestrial digital block 54 is so configured that power is supplied thereto from the tuner power supply 51 through the power switch 54a. In this manner, the tuner block 50 as the functional block is subdivided into the functional blocks of the BS block 52, the CS block 53, and the terrestrial digital block 54, whereby the functional blocks can be finely controlled to reduce power consumption efficiently even if the presence and absence of use of the functional blocks are divided by function.

The CEC block 60 is configured to transmit and receive a CEC signal to control apparatuses connected by an HDMI-standard cable. The CEC block 60 is connected to the HDMI block 14 of the main MCU 10. In addition, the CEC block 60 is so configured that power is supplied thereto from the CEC power supply 61 through the power switch 60a.

The Ethernet (registered trademark) block 70 is configured to transmit and receive an Ethernet (registered trademark) signal to communicate with an external network. The Ethernet (registered trademark) block 70 is connected to the central operation block 11 of the main MCU 10. Furthermore, the Ethernet (registered trademark) block 70 is so configured that power is supplied thereto from the Ethernet (registered trademark) power supply 71 through the power switch 70a.

The audio DAC block 80 is configured to convert a digital sound signal input from the central operation block 11 into an analog signal and output the analog signal to the gain filter block 82. In addition, the audio DAC block 80 is so configured that power is supplied thereto from the audio power supply 81 through the power switch 80a.

The gain filter block 82 is configured to amplify the analog sound signal input from the audio DAC block 80, remove noise or the like, and output the analog audio signal. In addition, the gain filter block 82 is so configured that power is supplied thereto from the audio power supply 83 through the power switch 82a.

The video block 90 is configured to transmit the composite signal of the analog image on the basis of an image signal output from the video block 15 of the main MCU 10. The Video block 91 is configured to transmit the component signal of the analog image on the basis of an image signal output from the video block 16 of the main MCU 10. Furthermore, the video blocks 90 and 91 each are so configured that power is supplied thereto from the video power supply 92 through the power switch 90a. In other words, the power supplied to the video blocks 90 and 91 having similar functions to each other can be controlled with the common power switch 90a.

The cable detection portion 93 is configured to detect the presence of the cables connected to the gain filter block 82 and the video blocks 90 and 91, respectively. In other words, the cable detection portion 93 detects whether or not the cables are inserted into terminals transmitting and receiving analog sound and images.

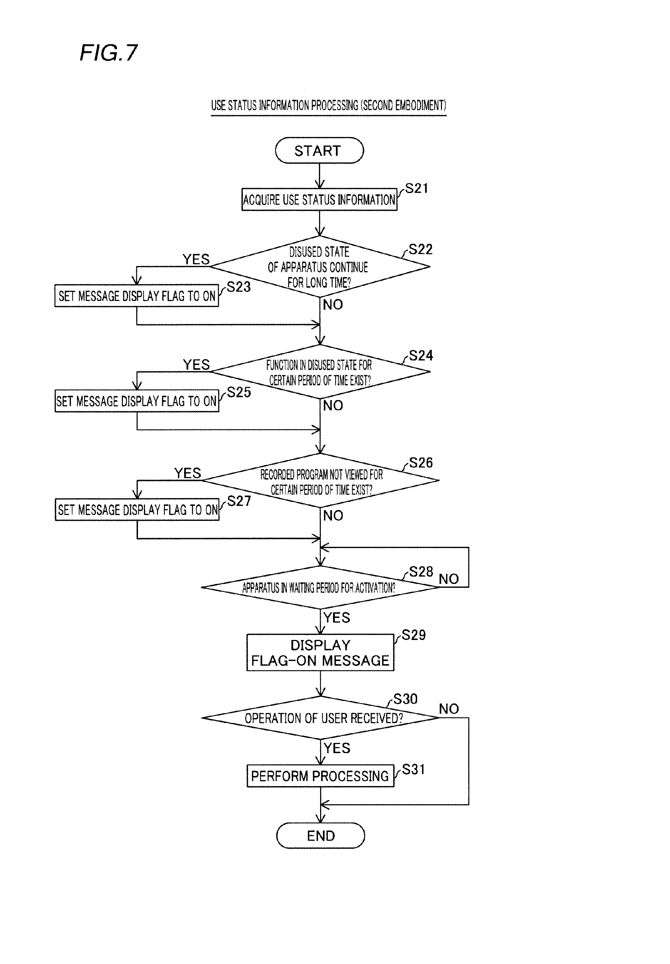

Next, use status information processing performed by the main MCU 10 of the BD recorder 100 is described with reference to Fig. 7.

When the BD recorder 100 is started, the main MCU 10 acquires use status information at a step S21. Specifically, the main MCU 10 acquires the use status information of the plurality of functional blocks accumulated and stored in the storage portion 18.

The main MCU 10 determines whether or not the disused state of the apparatus (BD recorder 100) continues for a long time at a step S22. Specifically, the main MCU 10 determines whether or not the BD recorder 100 has a use tendency in which the BD recorder 100 is activated in the state where the same has not been used for a long time on the basis of the use status information. When determining that the disused state of the BD recorder 100 does not continue for a long time, the main MCU 10 advances to a step S24. When determining that the disused state of the BD recorder 100 continues for a long time, on the other hand, the main MCU 10 sets a message display flag that the disused state of the apparatus continues for a long time to ON at a step S23 and advances to the step S24.

The main MCU 10 determines whether or not there is a function in a disused state for a certain period of time (one week, for example) at the step S24. When determining that there is no function in a disused state for a certain period of time, the main MCU 10 advances to a step S26. When determining that there is a function in a disused state for a certain period of time (one week, for example), on the other hand, the main MCU 10 sets a message display flag that there is a function in a disused state for a certain period of time to ON at a step S25. When there are a plurality of functional blocks in a disused state for a certain period of time, the main MCU 10 sets a message display flag to ON for each of the functional blocks in a disused state for a certain period of time. Then, the main MCU 10 advances to a step S26.

The main MCU 10 determines whether or not there is a program not viewed for a certain period of time (one month, for example), which is recorded every week at the step S26. When determining that there is no program not viewed for a certain period of time, which is recorded every week, the main MCU 10 advances to a step S28. When determining that there is a program not viewed for a certain period of time (one month, for example), which is recorded every week, on the other hand, the main MCU 10 sets a message display flag that there is a program not viewed for a certain period of time, which is recorded every week, to ON at a step S27. Then, the main MCU 10 advances to the step S28.

According to the second embodiment, the main MCU 10 determines whether or not the BD recorder 100 is in a waiting period for activation at a step S28, and repeats this determination until the BD recorder 100 enters the waiting period for activation. When the BD recorder 100 enters the waiting period for activation, the main MCU 10 displays a flag-ON message at a step S29. Specifically, the main MCU 10 displays the flag-ON message on the display portion 201 of the TV 200.

When setting the message display flag that the disused state of the apparatus continues for a long time to ON at the step S23 and setting the message display flag that there is a program not viewed for a certain period of time, which is recorded every week, to ON at the step S27, for example, the main MCU 10 displays a message "the disused state of the apparatus continues for a long time" and a message "there is a not-yet-viewed program recorded every week" on the display portion 201 of the TV 200, as shown in Fig. 8. Thus, the user is prompted to more properly use each of the functions of the BD recorder 100. Thereafter, the main MCU 10 repeats display of similar messages at a certain interval (one day, for example). Furthermore, the main MCU 10 stops repeat of message display when accepting a user's operation of rendering the display of similar messages unnecessary.

The main MCU 10 determines whether or not the operation of the user has been received at a step S30. Specifically, the main MCU 10 determines whether or not an operation of setting auto power off or an operation of canceling weekly timer recording has been performed in an example shown in Fig. 8. When not having received the operation of the user, the main MCU 10 terminates the use status information processing. When having received the operation of the user, on the other hand, the main MCU 10 performs processing of the operation received from the user at a step S31. When having received the operation of setting auto power off, for example, the main MCU 10 sets the BD recorder 100 to be automatically powered off when the BD recorder 100 is in a disused state for a certain time (one hour, for example). Thereafter, the main MCU 10 terminates the use status information processing.

The remaining structure of the electronic apparatus management system 101 according to the second embodiment is similar to that of the electronic apparatus management system 101 according to the aforementioned first embodiment.

According to the second embodiment, as hereinabove described, the BD recorder 100 is provided with the main MCU 10 notifying the user to operate the functional block corresponding to the prescribed use status on the basis of the use status information regarding the use states of the plurality of functional blocks. Thus, the user can stop or suppress use of each of the functional blocks on the basis of the notification, and hence power saving can be achieved in the BD recorder 100. Furthermore, the user can operate the functional blocks on the basis of the notification, and hence change in settings against the user's intention can be suppressed while the user's awareness of power saving can be promoted.

According to the second embodiment, as hereinabove described, the main MCU 10 is configured to notify the user to operate the functional block corresponding to the prescribed use status on the basis of the use status information regarding the use tendencies based on the results of accumulation of the use states of the plurality of functional blocks or the use states of the plurality of functional blocks. Thus, the BD recorder 100 can easily notify the user to operate the functional block corresponding to the prescribed use status by determining the use tendencies or the use states by the main MCU 10.

According to the second embodiment, as hereinabove described, the main MCU 10 is configured to notify the user to stop the functional block whose usage rate is not more than the prescribed usage rate as the prescribed use status, tending to be disused, of the plurality of functional blocks on the basis of the use status information. Thus, the user can easily stop the functional block tending to be disused, and hence power saving can be achieved in the BD recorder 100 without reducing user's convenience.

According to the second embodiment, as hereinabove described, the main MCU 10 is configured to perform control of outputting the notification information for instructing the user to operate the functional blocks to the TV 200. Thus, the user can be visually prompted to save power in the BD recorder 100 with the TV 200.

According to the second embodiment, as hereinabove described, the main MCU 10 is configured to perform control of displaying the guidance for operating the functional block in the prescribed use status. Thus, it becomes easy for the user to operate the functional block in the prescribed use status, and hence the user can easily configure the settings for each of the functional blocks. Thus, power saving can be easily achieved in the BD recorder 100.

According to the second embodiment, as hereinabove described, the main MCU 10 is configured to notify the user to operate the functional block on the basis of the use status information of the plurality of functional blocks and perform control of stopping the functional block corresponding to the prescribed use status. Thus, the user can be made aware of the functional block corresponding to the prescribed use status, and power saving can be achieved in the BD recorder 100 by stopping the functional block. Furthermore, the functional block corresponding to the prescribed use status is stopped, and hence heat generation resulting from power distribution can be reduced. Thus, the lifetime of the BD recorder 100 can be increased.

According to the second embodiment, as hereinabove described, the main MCU 10 is configured to notify the user of the use status (the usage time, the usage rate, and the usage frequency) of each of the functional blocks, the power consumption of each of the functional blocks, the electricity bill of each of the functional blocks, or the lifetime of each of the functional blocks on the basis of the use status information of the plurality of functional blocks. Thus, the user can be effectively prompted to save power in the BD recorder 100 by notifying the user of the use status of each of the functional blocks, the power consumption of each of the functional blocks, the electricity bill of each of the functional blocks, or the lifetime of each of the functional blocks.

According to the second embodiment, as hereinabove described, the main MCU 10 is configured to store and accumulate the use status information in the storage portion 18 and notify the user to operate the functional block on the basis of the use status information accumulated in the storage portion 18. Thus, the BD recorder 100 can easily notify the user to operate the functional block on the basis of the use status information of the plurality of functional blocks accumulated in the storage portion 18.

According to the second embodiment, as hereinabove described, the main MCU 10 is configured to perform control of informing the user of the advertisement from the server 102. Thus, the user can be prompted to more properly use, replace, or renew the BD recorder 100 in accordance with the use status of the user.

The remaining effects of the second embodiment are similar to those of the aforementioned first embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the BD recorder is applied as the example of the electronic apparatus according to the present invention in each of the aforementioned first and second embodiments, the present invention is not restricted to this. The present invention may alternatively be applied to an electronic apparatus other than the BD recorder.

While the main MCU (control portion) of the BD recorder (electronic apparatus) is configured to calculate the cumulative functional times of the functional blocks in the cumulative time when the BD recorder (electronic apparatus) is active in the prescribed period of time (one week, for example) in the aforementioned first embodiment, the present invention is not restricted to this. According to the present invention, the control portion of the electronic apparatus may alternatively be configured to calculate the cumulative functional times of the functional blocks in a cumulative period of time for each prescribed time zone (morning/afternoon/midnight, weekdays/holidays, or the like, for example). Furthermore, the control portion of the electronic apparatus may alternatively be configured to compare a past long-term cumulative time with a latest cumulative time in a certain period of time. In addition, the control portion may alternatively be configured to determine tendency to be disused by acquiring the use tendency information of the plurality of functional blocks on the basis of at least one of the use states of the plurality of functional blocks accumulated in a prescribed period of time and the use states of the plurality of functional blocks accumulated for each time zone.

While the main MCU (control portion) of the BD recorder (electronic apparatus) is configured to perform control of disconnecting the power supplied to the functional block tending to be disused on the basis of the use tendency information of the functional blocks in the aforementioned first embodiment, the present invention is not restricted to this. According to the present invention, the control portion of the electronic apparatus may alternatively be configured to control connection/disconnection of power supplied to the functional blocks according to a time zone on the basis of the use tendency information of the functional blocks. When the BD recorder (electronic apparatus) tends to be used to record a program in a midnight time zone, for example, the control portion of the electronic apparatus may alternatively be configured to supply power only to a functional block for recording in the midnight time zone and disconnect power supplied to other functional blocks. Furthermore, in this case, the control portion of the electronic apparatus may alternatively be configured to develop a program for the functional block for recording in accordance with the midnight time zone.

While the main MCU (control portion) is configured to acquire the use tendency information of the plurality of functional blocks on the basis of the lengths of time the functions are used, the numbers of times the functions are used, validity/invalidity of the functions, or the amounts of processed information in the aforementioned first embodiment, the present invention is not restricted to this. According to the present invention, the control portion may alternatively be configured to acquire the use tendency information of the plurality of functional blocks on the basis of at least one of the lengths of time the functions are used, the numbers of times the functions are used, validity/invalidity of the functions, and the amounts of processed information.

While the main MCU (control portion) is configured to perform control of disconnecting the power supplied to the functional block whose usage rate is not more than the prescribed usage rate with respect to the usage times of the functions, the usage frequencies of the functions, the validity times or validity frequencies of the functions, and the amounts of processed information, tending to be disused, of the plurality of functional blocks in the aforementioned first embodiment, the present invention is not restricted to this. According to the present invention, the control portion may alternatively be configured to perform control of disconnecting power supplied to the functional block whose usage rate is not more than the prescribed usage rate with respect to at least one of the usage times of the functions, the usage frequencies of the functions, the validity times or validity frequencies of the functions, and the amounts of processed information, tending to be disused, of the plurality of functional blocks.

While the power supplied to the two similar functional blocks is disconnected by controlling the common power switch in the aforementioned first embodiment, the present invention is not restricted to this. According to the present invention, power supplied to three or more similar functional blocks may alternatively be disconnected by controlling a common power switch.

While the BD recorder (electronic apparatus) includes the functions of the BD recorder according to the first embodiment in the aforementioned second embodiment, the present invention is not restricted to this. According to the present invention, the electronic apparatus may alternatively include the functions according to the second embodiment without including the functions according to the first embodiment.

While the prescribed use status includes the statuses of the prescribed usage rate, the prescribed usage time, the prescribed usage frequency, the untouched state, and the prescribed use state of the record medium in the aforementioned second embodiment, the present invention is not restricted to this. According to the present invention, the prescribed use status may alternatively include at least one of the statuses of the prescribed usage rate, the prescribed usage time, the prescribed usage frequency, the untouched state, and the prescribed use state of the record medium.

While the main MCU (control portion) is configured to notify the user of the use status of each of the functional blocks, the power consumption of each of the functional blocks, the electricity bill of each of the functional blocks, or the lifetime of each of the functional blocks on the basis of the use status information of the plurality of functional blocks in the aforementioned second embodiment, the present invention is not restricted to this. According to the present invention, the control portion may alternatively be configured to notify the user of at least one of the use status of each of the functional blocks, the power consumption of each of the functional blocks, the electricity bill of each of the functional blocks, and the lifetime of each of the functional blocks on the basis of the use status information of the plurality of functional blocks.

While the user is notified to operate the functional block corresponding to the prescribed use status in the waiting period for activation of the BD recorder (electronic apparatus) in the aforementioned second embodiment, the present invention is not restricted to this. According to the present invention, the user may alternatively be notified to operate the functional block corresponding to the prescribed use status in the standby state of the electronic apparatus, when the use status information is updated, when the use status information is varied by a prescribed fraction, or when a request is received from the user, for example.

While the notification for instructing the user to operate the functional block corresponding to the prescribed use status is displayed on the display portion of the external TV (display device) in the aforementioned second embodiment, the present invention is not restricted to this. According to the present invention, the notification for instructing the user to operate the functional block corresponding to the prescribed use status may alternatively be displayed on a display portion of the electronic apparatus or given with a sound from a speaker of the electronic apparatus, for example. Furthermore, the notification may alternatively be given by another external apparatus other than the display device.

While the user is notified to operate the functional block corresponding to the prescribed use status on the basis of the use status information regarding the use tendencies based on the results of accumulation of the use states of the plurality of functional blocks or the use states of the plurality of functional blocks in the aforementioned second embodiment, the present invention is not restricted to this. According to the present invention, the user may alternatively be notified to operate the functional block corresponding to the prescribed use status on the basis of the use status information regarding at least one of the use tendencies based on the results of accumulation of the use states of the plurality of functional blocks and the use states of the plurality of functional blocks.

While the BD recorder as the electronic apparatus includes the plurality of functional blocks separated for each function in each of the aforementioned first and second embodiments, the present invention is not restricted to this. According to the present invention, the electronic apparatus may alternatively include a plurality of functional blocks constituting one function or one functional block constituting a plurality of functions. Alternatively, the electronic apparatus may include a plurality of functional blocks, a plurality of which overlappingly constitute a plurality of functions.

While processing operations of the main MCU (control portion) are described by using the flowchart described in a flow-driven manner in which processing is performed in order along a processing flow for the convenience of illustration in each of the aforementioned first to third embodiments, the present invention is not restricted to this. According to the present invention, the processing operations of the control portion may alternatively be performed in an event-driven manner in which processing is performed on an event basis. In this case, the processing operations of the control portion may be performed in a complete event-driven manner or in a combination of an event-driven manner and a flow-driven manner.

## Claims

1. An electronic apparatus comprising:
a plurality of functional blocks (14, 15, 16, 30, 40, 50, 52, 53, 54, 60, 70, 80, 82, 90, 91);
a storage portion (18) storing and accumulating use states of the plurality of functional blocks; and
a control portion (10), wherein
the control portion is configured to acquire use tendency information of the plurality of functional blocks on the basis of the use states of the plurality of functional blocks accumulated in the storage portion and perform control of disconnecting power supplied to a functional block whose usage rate is not more than a prescribed usage rate, tending to be disused, of the plurality of functional blocks in a state where power is supplied to at least one functional block on the basis of the use tendency information of the plurality of functional blocks.

2. The electronic apparatus according to claim 1, wherein
the control portion is configured to determine tendency to be disused by acquiring the use tendency information of the plurality of functional blocks on the basis of at least one of lengths of time functions are used, numbers of times the functions are used, validity/invalidity of the functions, and amounts of processed information.

3. The electronic apparatus according to claim 1, wherein
the control portion is configured to determine tendency to be disused by acquiring the use tendency information of the plurality of functional blocks on the basis of at least one of the use states of the plurality of functional blocks accumulated in a prescribed period of time and the use states of the plurality of functional blocks accumulated for each time zone.

4. The electronic apparatus according to claim 1, wherein
the control portion is configured to perform control of disconnecting the power supplied to the functional block whose usage rate is not more than the prescribed usage rate with respect to at least one of usage times of functions, usage frequencies of the functions, validity times or validity frequencies of the functions, and amounts of processed information, tending to be disused, of the plurality of functional blocks.

5. The electronic apparatus according to claim 1, wherein
the control portion is configured to perform control of lowering priority of display of a user interface for operating the functional block tending to be disused of the plurality of functional blocks on the basis of the use tendency information of the plurality of functional blocks.

6. The electronic apparatus according to claim 1, further comprising a plurality of power switches (14a, 15a, 16a, 30a, 40a, 52a, 53a, 54a, 60a, 70a, 80a, 82a, 90a) corresponding to the plurality of functional blocks, wherein
the control portion is configured to perform control of disconnecting the power supplied to the functional block tending to be disused by controlling the power switches.

7. The electronic apparatus according to claim 1, further comprising a communication portion (70) capable of transmitting the use tendency information to an external host computer (2, 3) through a network.

8. The electronic apparatus according to claim 1, wherein
the control portion is configured to notify a user to operate a functional block corresponding to a prescribed use status of the plurality of functional blocks on the basis of use status information regarding the use states of the plurality of functional blocks.

9. The electronic apparatus according to claim 8, wherein
the control portion is configured to notify the user to operate the functional block corresponding to the prescribed use status on the basis of the use status information regarding at least one of use tendencies based on results of accumulation of the use states of the plurality of functional blocks and the use states of the plurality of functional blocks.

10. The electronic apparatus according to claim 8, wherein
the prescribed use status includes at least one of statuses of a prescribed usage rate, a prescribed usage time, a prescribed usage frequency, an untouched state, and a prescribed use state of a record medium.

11. The electronic apparatus according to claim 10, wherein
the control portion is configured to notify the user to stop the functional block whose usage rate is not more than the prescribed usage rate as the prescribed use status, tending to be disused, of the plurality of functional blocks on the basis of the use status information.

12. The electronic apparatus according to claim 8, wherein
the control portion is configured to perform control of outputting notification information for instructing the user to operate the functional block to an external display device (200).

13. The electronic apparatus according to claim 8, wherein
notification for instructing the user to operate the functional block includes display notification, and
the control portion is configured to perform control of displaying guidance for operating the functional block in the prescribed use status.

14. The electronic apparatus according to claim 8, wherein
the control portion is configured to notify the user to operate the functional block on the basis of the use status information of the plurality of functional blocks and perform control of stopping the functional block corresponding to the prescribed use status.

15. The electronic apparatus according to claim 8, so configured that the use status information of the plurality of functional blocks is stored and accumulated in the storage portion, wherein
the control portion is configured to store and accumulate the use status information in the storage portion and notify the user to operate the functional block on the basis of the use status information accumulated in the storage portion.
